# EUROPÄISCHE PATENTSCHRIFT

(11) **EP 2 047 579 B1**
(45) Veröffentlichungstag und Bekanntmachung des Hinweises auf die Patenterteilung: **14.05.2014**
(21) Anmeldenummer: 07786403.1
(22) Anmeldetag: 28.07.2007
(51) Int. Cl.: H02J 7/14, H02J 7/34

(54) **SYSTEM ZUR SPANNUNGSVERSORGUNG VON ELEKTRISCHEN VERBRAUCHERN EINES KRAFTFAHRZEUGS UNTER VERWENDUNG EINES SUPERCAPS**
SYSTEM FOR SUPPLYING VOLTAGE TO ELECTRICAL LOADS OF A MOTOR VEHICLE USING A SUPERCAP
SYSTÈME D'ALIMENTATION ÉLECTRIQUE DES CHARGES ÉLECTRIQUES D'UN VÉHICULE AUTOMOBILE EN UTILISANT UN SUPERCONDENSATEUR

(30) Priorität: 04.08.2006 DE 102006036424
(43) Veröffentlichungstag der Anmeldung: 15.04.2009
(73) Patentinhaber: Bayerische Motoren Werke Aktiengesellschaft, 80809 München (DE)
(72) Erfinder: BROESSE, Andreas, 81375 München (DE); POLENOV, Dieter, 80937 München (DE); PROEBSTLE, Hartmut, 86159 Augsburg (DE); FUCHS, Markus, 80687 München (DE); RÖSSLER, Michael, 82049 Pullach (DE); SCHMIDL, Maximilian, 82046 Pullach (DE)
(86) Internationale Anmeldenummer: PCT/EP2007/006692
(87) Internationale Veröffentlichungsnummer: WO 2008/014944

(56) Entgegenhaltungen:
- EP-A- 1 013 506
- EP-A- 1 247 979
- EP-A- 1 405 767
- US-A- 5 880 951

## Beschreibung

Die Erfindung betrifft ein System zur Spannungsversorgung von elektrischen Verbrauchern im Bordnetz eines Kraftfahrzeugs.

Bei bekannten Systemen hat der zur Spannungserzeugung erforderliche Generator eine erhebliche Leistungsaufnahme, die vom Motor des Kraftfahrzeugs bereitgestellt werden muss.

Aus der EP 1 405 767 A ist ein gattungsgemäßes System zur Spannungsversorgung bekannt.

Aus der US 5 880 951 A ist die Verwendung eines Doppelschicht-Kondensators als elektrischer Energiespeicher in Fahrzeug-Bordnetzen bekannt.

Aufgabe der vorliegenden Erfindung ist die Reduzierung der vom Motor des Kraftfahrzeugs bereitzustellenden Leistung, um das Bordnetz des Kraftfahrzeugs mit ausreichender elektrischer Energie zu versorgen.

Diese Aufgabe wird durch ein System zur Spannungsversorgung mit den Merkmalen des Patentanspruchs 1 gelöst. Vorteilhafte Ausgestaltungen der Erfindung sind Gegenstand der abhängigen Ansprüche.

Ein wesentlicher Aspekt der Erfindung besteht darin, die elektrischen Verbraucher im Bordnetz eines Kraftfahrzeugs in eine Gruppe von mindestens zwei Arten elektrischer Verbraucher einzuteilen. Die erste Gruppe von elektrischen (unsensiblen) Verbrauchern arbeitet auch dann zuverlässig, wenn die Spannung relativ stark schwankt und/oder wenn die Spannung relativ niedrig ist, z.B. wenn die Spannung bei einem 12 Volt-Bordnetz auf unter 10 Volt absinkt und/oder zwischen ca. 9 und 16 Volt schwankt.

Die zweite Gruppe von elektrischen (sensiblen) Verbrauchern arbeitet hingegen nur dann zuverlässig, wenn die Spannung nur relativ gering um die Nennspannung schwankt, z.B. wenn die Spannung bei einem 12 Volt-Bordnetz lediglich zwischen ca. 11 und 13 Volt schwankt. Erfindungsgemäß wird das Bordnetz in mindestens zwei Bordnetz-Bereiche aufgeteilt; im ersten Bordnetz-Bereich sind die unsensiblen elektrischen Verbraucher und im zweiten Bordnetz-Bereich sind die sensiblen elektrischen Verbraucher angeordnet.

Ein Stromfluss vom zweiten Bordnetz-Bereich in den ersten Bordnetz-Bereich wird erfindungsgemäß durch eine Sperrvorrichtung, bevorzugt eine Halbleiterdiode zwischen erstem und zweitem Bordnetz-Bereich, weitgehend verhindert. Im ersten Bordnetz-Bereich ist der elektrische Generator und eine Fahrzeugbatterie parallel zu den ersten elektrischen Verbrauchern und im zweiten Bordnetz-Bereich ist ein Doppelschicht-Kondensator bzw. ein sog. Supercap, parallel zu den zweiten elektrischen Verbrauchern vorgesehen. Der Doppelschicht-Kondensator wird während des Betriebs des Kraftfahrzeugs regelmäßig auf eine Spannung aufgeladen, die die sensiblen zweiten elektrischen Verbraucher betriebsbereit hält, während er sich entlädt.

Während der Phasen, in denen der Doppelschicht-Kondensator nicht aufgeladen werden muss, wird die Spannung des Generators soweit reduziert, dass die Betriebsbereitschaft der ersten elektrischen Verbraucher (noch) gegeben ist (vgl. DE 2006 002 985). Dabei ist die Spannung am Doppelschicht-Kondensator höher als an den ersten (unsensiblen) Verbrauchern und die Sperrvorrichtung bzw. Diode verhindert ein Entladen des Doppelschicht-Kondensators über die Verbraucher des ersten Bordnetz-Bereichs. Umgekehrt ermöglicht die Sperrvorrichtung einen elektrischen Stromfluss von dem elektrischen Generator über die Sperrvorrichtung bzw. Diode in den zweiten Bordnetz-Bereich, wenn die Ausgangs-Spannung des Generators zur erneuten Aufladung des Doppelschicht-Kondensators angehoben wird.

Die Überwachung des Ladezustands bzw. der Ausgangs-Spannung des Doppelschicht-Kondensators erfolgt über eine Ladesteuerungs-Vorrichtung bzw. eine Steuer-/Leistungseinheit, die den Generator derart ansteuert, dass dieser bei einem Unterschreiten einer Schwellenspannung am Kondensator die Spannung zum Laden erhöht und nachfolgend wieder reduziert.

Gegenüber dem bekannten Stand der Technik kann der Generator derart angesteuert werden, dass er während des Betriebs des Kraftfahrzeugs überwiegend lediglich eine niedrigere Spannung zum Betrieb der unsensiblen Verbraucher bereitstellt. Beim bekannten Stand der Technik war es hingegen notwendig, die Spannung dauerhaft soweit anzuheben, dass auch den sensiblen Verbrauchern stets eine ausreichende Betriebsspannung zur Verfügung stand.

Durch die erfindungsgemäße Lösung kann also die Leistungsaufnahme des Generators während langer Zeiträume reduziert und damit der Kraftstoff-Verbrauch und der CO₂-Ausstoss des Kraftfahrzeugs deutlich verringert werden.

Bei einer besonders vorteilhaften Ausführungsform der Erfindung ist vorgesehen, dass das Vorladen und/oder Ankoppeln bzw. Trennen des Supercaps an das Bordnetz bzw. von dem Bordnetz durch eine separate Steuer-/Leistungseinheit erfolgt. Die Steuer-/Leistungseinheit führt bevorzugt auch die Diagnose des Supercaps, insbesondere eine Kapazitäts- und/oder Widerstands-Bestimmung, während des Vorladebetriebs aus. Durch diese Maßnahme kann das Supercap in eleganter Weise in das Bordnetz eines Fahrzeugs integriert werden.

Erfindungsgemäß ist vorgesehen, dass während des Vorladens bzw. Ladens des Supercaps auf die Bordnetzspannung des zweiten Bordnetz-Bereichs die Temperatur des Supercaps gemessen und mit einem Maximalwert verglichen wird. Alternativ oder ergänzend wird ein dem Supercap zugeordneter Fehlerspeicher, bevorzugt in der Steuer-/Leistungseinheit, ausgelesen. Der Fehlerspeicher weist erfindungsgemäß bevorzugt einen Fehlereintrag auf, wenn in der Vergangenheit ein Vergleich der seinerzeit vorliegenden Kapazitäts- bzw. C-Werte und/oder der Widerstands- bzw. R-Werte des Supercaps mit hinterlegten temperatur- und ladestromabhängigen Kennwerten des Supercaps auf das Vorliegen eines Fehlers am Supercaps hinwies. Auf der Basis dieser Diagnosen können Störungen des Bordnetzes durch einen fehlerhaften Supercap vermieden werden.

Erfindungsgemäß ist ferner vorgesehen, dass dann, wenn der Temperatur-Maximalwert durch den Supercap unterschritten wird und der Fehlereintrag fehlt, der Supercap bis auf die aktuelle Spannung des zweiten Bordnetz-Bereichs bzw. bis auf weitgehend die aktuelle Spannung des zweiten Bordnetz-Bereichs geladen wird, bevor der Supercap

elektrisch mit dem zweiten Bordnetz-Bereich verbunden wird und der Supercap nachfolgend die Spannung im zweiten Bordnetz-Bereich stabilisiert. Durch diese Maßnahme wird eine schonende Kopplung des Supercaps an das Bordnetz des Fahrzeugs ermöglicht.

Bei einer Ausgestaltung der Erfindung ist vorgesehen, dass dann, wenn die Klemme R und/oder die Klemme 15 spannungslos und/oder die Türen für länger als einen vorbestimmten Zeitraum verschlossen sind, der Supercap auf ca. 9 Volt über ein Zurückspeisen in das Bordnetz entladen wird und dann vom Bordnetz elektrisch entkoppelt wird. Hierdurch wird eine schonende Entkopplung des Supercaps von dem Bordnetz erreicht und das Bordnetz wegen des ansonsten hohen Ruhestrombedarfs des Supercaps entlastet.

Durch dies vorgenannten Maßnahmen wird zudem der Ladevorgang, insbesondere im Sinne einer weiteren Reduzierung des CO₂-Ausstosses, optimiert.

Das erfindungsgemäße System wird nachfolgend anhand von Zeichnungen einer beispielhaften Ausführungsform der Erfindung näher erläutert. Es zeigen:
- Fig. 1: ein Bordnetz aus zwei Bordnetz-Bereichen, die durch eine Diode elektrisch miteinander verbunden sind, und
- Fig. 2: ein Ablaufdiagramm, das insbesondere das Vorladen, das Ankoppeln und das Abkoppeln des Supercaps vom Bordnetz des Fahrzeugs beschreibt.

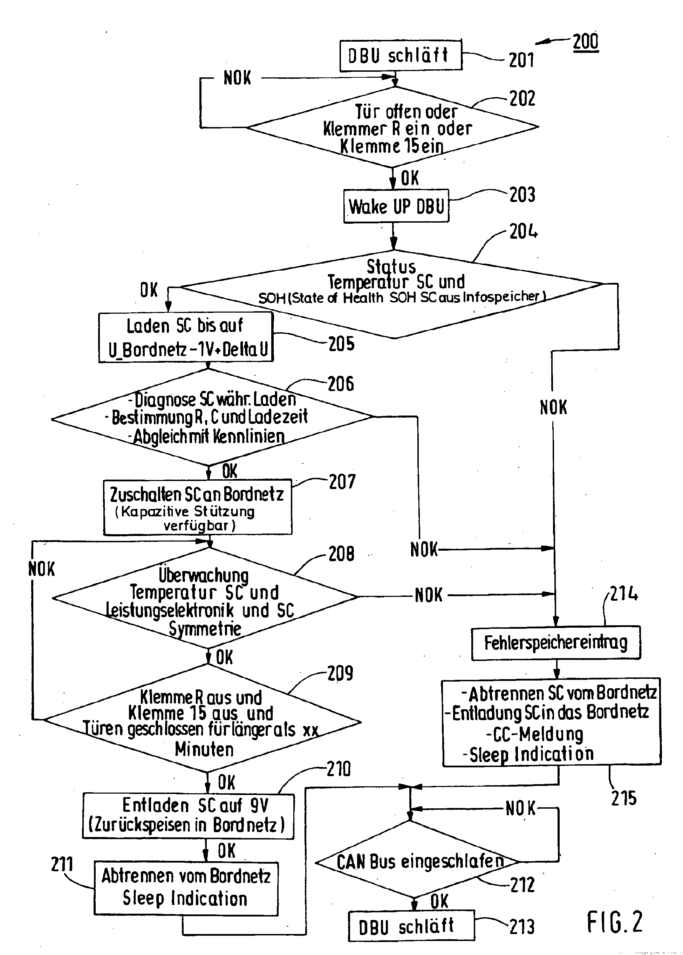

Das erfindungsgemäße System bzw. erfindungsgemäße Bordnetz 100 zur Spannungsversorgung von elektrischen Verbrauchern 103 und 106 besteht aus zwei Bordnetz-Bereichen A und B. Der erste Bornetz-Bereich A weist einen elektrischen Generator 101, eine Fahrzeugbatterie 102 und mehrere erste elektrische Verbraucher 103 auf. Der zweite Bordnetz-Bereich B weist einen Energiespeicher in Form eines Kondensators bzw. Supercaps 105 und mehrere zweite elektrische Verbraucher 106 auf. Zwischen dem positiven Pol des Supercaps und dem zweiten Bordnetz-Bereich B ist eine Steuer-/Leistungseinheit 107 vorgesehen. Diese steuert die Diagnose und das Vorladen des Supercaps sowie das Koppeln und das Entkoppeln des Supercaps mit dem zweiten Bordnetz-Bereich bzw. von dem zweiten Bordnetz-Bereich. Die Funktionsweise der Steuer-/Leistungseinheit 107 wird nachfolgend im Zusammenhang mit der Fig. 2 näher beschrieben.

Zwischen den zwei Bordnetz-Bereichen A und B ist eine Sperrvorrichtung 104 in Form einer Halbleiterdiode vorgesehen, die einen Stromfluss vom ersten Bordnetz-Bereich A in den zweiten Bordnetz-Bereich B ermöglicht und einen umgekehrten Stromfluss vom zweiten Bordnetz-Bereich B in den ersten Bordnetz-Bereich A weitgehend verhindert.

Die Ausgangsspannung des elektrischen Generators 101 wird angehoben und der Energiespeicher bzw. Kondensator 105 aufgeladen, wenn ein erster Schwellenwert der elektrischen Spannung im zweiten Bordnetz-Bereich B unterschritten wird.

Die ersten elektrischen Verbraucher 103 benötigen eine Betriebsspannung zu ihrem Betrieb, die in einem ersten Spannungsbereich von 10 bis 16 Volt liegt, d.h. es handelt sich um sog. "unsensible" Verbraucher. Die zweiten elektrischen Verbraucher 106 benötigen eine Betriebsspannung zu ihrem Betrieb, die in einem zweiten Spannungsbereich von 11 bis 13 Volt liegt, d.h. es handelt sich um sog. "sensible" Verbraucher.

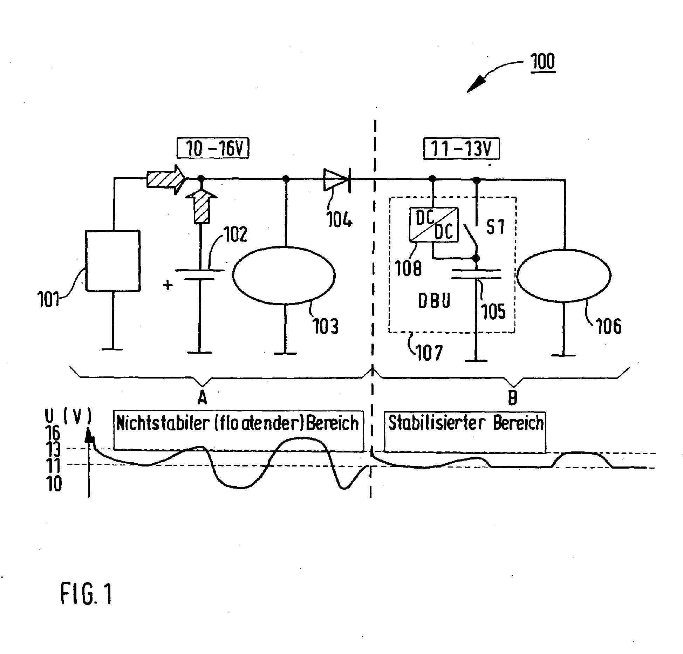

Der erste Bordnetz-Bereich A ist, wie der Graph "Spannung als Funktion der Zeit" in Fig. 1 schematisch zeigt, durch relativ hohe Spannungsschwankungen zwischen ca. 10 und 16 Volt gekennzeichnet (nichtstabiler bzw. schwankender Bereich). Demgegenüber ist der zweite Bordnetz-Bereich B durch relativ geringe Spannungsschwankungen zwischen 11 und 13 Volt gekennzeichnet (stabilisierter Bereich).

Fig. 2 zeigt ein Ablaufdiagramm 200, das insbesondere das Vorladen, das Ankoppeln und das Abkoppeln des Supercaps vom Bordnetz des Fahrzeugs beschreibt. Die Schritte des Ablaufdiagramms werden bevorzugt von der Steuer-/Leistungseinheit 107 ausgeführt, die hierzu vorteilhafterweise einen programmgesteuerten Mikroprozessor und die entsprechende Programmsteuerung bzw. Software aufweist. Im Zustand 201 ist die Steuer-/Leistungseinheit 107 bzw. DBU, d.h. "Dynamische Bordnetzunterstützung" in einem Ruhezustand, d.h. außer Funktion, und das Supercap 105 ist nicht mit dem zweiten Bordnetz-Bereich B elektrisch gekoppelt (Schalter S1 ist offen).

Im Schritt 202 erfolgt eine Prüfung, ob eine Tür des betreffenden Fahrzeugs offen ist und/oder die an sich bekannten Klemmen R und/oder 15 eingeschaltet bzw. spannungsführend sind. Ist das Ergebnis der Prüfung positiv bzw. OK wird die Steuer-/Leistungseinheit 107 "aufgeweckt" bzw. in einen betriebsbereiten Zustand versetzt (Zustand 203). Der Supercap wird über den DC/DC-Wandler 108 geladen. Ist das Ergebnis der Prüfung negativ bzw. NOK wird die Prüfung wiederholt vorgenommen.

Nach dem "Aufwecken" der Steuer-/Leistungseinheit 107 wird im Schritt 204 die aktuelle Temperatur des Supercaps ermittelt und mit einem Maximal-Temperaturwert verglichen. Ferner wird überprüft, ob eine Fehlerspeichereintrag in der Steuer-/Leistungseinheit 107 vorhanden ist, der anzeigt, dass der Supercap in der Vergangenheit in einem Zustand war, der auf einen Fehler des Supercaps hinweist.

Ist das Ergebnis der Überprüfung im Schritt 204 negativ (Status OK), wird der Supercap im Schritt 205 bis auf die Bordnetz-Spannung des ersten Bordnetz-Bereichs A, bevorzugt reduziert um 1 Volt, aufgeladen bzw. vorgeladen. Während des Lade- bzw. Vorladevorgangs wird der Widerstand R, die Kapazität C und die Ladezeit t des Supercaps bzw. Kondensators ermittelt und mit Referenzwerten verglichen (Schritt 206). Ist das Ergebnis dieses Vergleichs positiv (Status OK), d.h. zeigt der Supercap ein intaktes Verhalten, wird der Supercap nach dem Abschluss des Vorladevorgangs im Schritt 207 mit dem Bordnetz verbunden und stabilisiert die Spannung des zweiten Bordnetz-Bereichs (B).

Während der Kopplung des Supercaps 105, d.h. während seines stabilisierenden Betriebs, wird entsprechend Schritt 208 fortlaufend überwacht, ob die Temperatur des Supercaps und/oder der Leistungselektronik der Steuer-/Leistungseinheit unterhalb der maximal zulässigen Betriebstemperatur ist, und ob die Supercap-Symmetrie eingehalten wird. Hinsichtlich der Symmetrie wird überprüft, ob die Polarisation der Supercap-Einzelzellen des Supercap-Moduls innerhalb vorgegebener Grenzen liegt. Vorzugsweise sind das bei Supercaps mit organischen Elektrolyten zwischen 2,3 und 3,0 Volt. Sind die Ergebnisse der Überwachungen positiv (Zustand OK), wird im Schritt 209 fortlaufend überprüft, ob eine Tür des Fahrzeugs seit einem vorbestimmten Zeitraum verschlossen ist und/oder die an sich bekannten Klemmen R und/oder 15 ausgeschaltet bzw. spannungsfrei sind.

Ist das Ergebnis der Prüfung positiv bzw. OK wird der Supercap im Schritt 210 auf 9 Volt entladen, indem die überschüssige Ladung in das Bordnetz zurückgespeist wird und hierdurch den Generator temporär entlastet.

Nach Abschluss des (teilweisen) Entladevorgangs des Supercaps wird der Supercap im Schritt 211 vom Bordnetz getrennt und die spannungsstabilisierende Wirkung des Supercaps auf die Spannung im zweiten Bordnetz-Bereich B ist nicht mehr gegeben.

Im nachfolgenden Schritt 212 wird überprüft, ob der CAN-Bus des Fahrzeugs inaktiv ist. Ist dies gegeben, wird Steuer-/Leistungseinheit 107 bzw. DBU in einen Schlafmodus versetzt (Zustand 213).

War das Ergebnis der Überwachung im Schritt 204 negativ (NOK) erfolgt eine Fehlerspeichereintrag im Fehlerspeicher der Steuer-/Leistungseinheit 107 im Schritt 214 und der Supercap 105 wird vom Bordnetz getrennt, der Supercap wird entladen und es erfolgt eine entsprechende Meldung an den Fahrer eventuell mit dem zusätzlichen Hinweis, dass der Supercap deaktiviert wurde bzw. in einem Ruhemodus ist.

Die Schritte 214 und 215 werden auch dann durchlaufen, wenn das Ergebnis des Schritts 206 und/oder 208 negativ (NOK) ist. An den Schritt 215 schließen sich dann die Schritte 212 und 213 an.

## Patentansprüche

1. System (100) zur Spannungsversorgung von elektrischen Verbrauchern im Bordnetz eines Kraftfahrzeugs bei dem
- das Bordnetz aus mindestens zwei Bordnetz-Bereichen (A, B) besteht, der erste Bordnetz-Bereich (A) einen elektrischen Generator (101), eine Fahrzeugbatterie (102) sowie ein oder mehrere erste elektrische Verbraucher (103) und der zweite Bordnetz-Bereich (B) einen Energiespeicher (105) und ein oder mehrere zweite elektrische Verbraucher (106) aufweist,
- zwischen den zwei Bordnetz-Bereichen (A, B) eine Sperrvorrichtung (104) vorgesehen ist, wie insbesondere eine Halbleiterdiode oder ein Leistungsschalter, die einen Stromfluss vom ersten Bordnetz-Bereich (A) in den zweiten Bordnetz-Bereich (B) ermöglicht und einen umgekehrten Stromfluss vom zweiten Bordnetz-Bereich (B) in den ersten Bordnetz-Bereich (A) weitgehend verhindert, und
- dass die Ausgangsspannung des elektrischen Generators (101) angehoben ist und der Energiespeicher (105) aufgeladen wird, wenn ein erster Schwellenwert der elektrischen Spannung im zweiten Bordnetz-Bereich (B) unterschritten ist, **dadurch gekennzeichnet, dass**
- der Energiespeicher ein Doppelschicht-Kondensator bzw. ein Supercap (105) ist ,
- eine Ladersteuerungs-Vorrichtung vorgesehen und derart angepaßt ist, daß
- während des Vorladens bzw. Ladens des Supercaps auf die Bordnetzspannung des
zweiten Bordnetz-Bereichs (B) die Temperatur des Supercaps gemessen und mit einem Maximalwert verglichen wird und/oder ein dem Supercap zugeordneter Fehlerspeicher ausgelesen wird, wobei der Fehlerspeicher einen Fehlereintrag aufweist, wenn in der Vergangenheit ein Vergleich der seinerzeit vorliegenden Kapazitäts- bzw. C-Werte und/oder der Widerstands- bzw. R-Werte des Supercaps (105) mit hinterlegten temperatur- und ladestromabhängigen Kennwerten des Supercaps auf das Vorliegen eines Fehlers am Supercaps hinweist, und
- dann, wenn der Temperatur-Maximalwert durch den Supercap unterschritten wird und der Fehlereintrag fehlt, der Supercap (105) weitgehend bis auf die aktuelle Spannung des zweiten Bordnetz-Bereichs (B) geladen wird, bevor der Supercap elektrisch mit dem zweiten Bordnetz-Bereich (B) verbunden wird und die Spannung im zweiten Bordnetz-Bereich stabilisiert, wobei ein Fehlereintrag dann erfolgt, wenn der Kapazitäts- bzw. C-Wert und/oder der Widerstands- bzw. R-Wert des Supercaps auf einen Fehler am Supercap hindeutet.

2. System nach Anspruch 1, **dadurch gekennzeichnet, dass** die Ladesteuerungs-Vorrichtung eine separate Steuer-/Leistungseinheit (107) ist, durch welche das Vorladen und/oder Ankoppeln bzw. Trennen des Supercaps (105) an das Bordnetz bzw. von dem Bordnetz erfolgt, und die bevorzugt auch die Diagnose des Supercaps, insbesondere eine Kapazitäts- und/oder Widerstands-Bestimmung, während des Vorladebetriebs übernimmt.

3. System nach Anspruch 1 oder 2, **dadurch gekennzeichnet, dass** die Ladesteuerungs-Vorrichtung ferner derart angepaßt ist, dass dann, wenn die Klemme R und/oder die Klemme 15 spannungslos und/oder die Türen für länger als einen vorbestimmten Zeitraum verschlossen sind, der Supercap auf eine Spannung unterhalb der Bordnetzspannung des ersten Bordnetz-Bereichs und/oder des zweiten Bordnetz-Bereichs, vorzugsweise unter ca. 6 bis 9 Volt, über ein Zurückspeisen in das Bordnetz entladen wird und dann vom Bordnetz elektrisch entkoppelt wird.

## Claims

1. A system (100) for supplying voltage to electrical loads in an on-board electrical system of a motor vehicle, wherein
- the on-board electrical system comprises at least two on-board electrical system areas (A, B), the first on-board electrical system (A) having an electric generator (101), a vehicle battery (102) as well as one or more first electrical loads (103) and the second on-board electrical system (B) having an energy store (105) and one or more second electrical loads (106),
- provided between the two on-board electrical system areas (A, B) is a blocking device (104), such as, more especially, a semiconductor diode or a power switch, which allows a current flow from the first on-board electrical system area (A) into the second on-board electrical system area (B) and substantially prevents a reverse current flow from the second on-board electrical system area (B) into the first on-board electrical system area (A), and
- in that the output voltage of the electric generator (101) is increased and the energy store (105) is charged when the electrical voltage in the second on-board electrical system area (B) falls below a first threshold value, **characterised in that**
- the energy store is double-layer capacitor or a supercap (105),
- a charge control device is provided and adapted in such a way that
- during the precharging or charging of the supercap to the on-board electrical system voltage of the second on-board electrical system area (B), the temperature of the supercap is measured and compared with a maximum value and/or a fault memory associated with the supercap is read out, the fault memory having a fault input if, in the past, a comparison of the capacitance and/or C-values that were present at that time and/or of the resistance or R-values of the supercap (105) with stored temperature and charge current-dependent characteristics of the supercap indicates the presence of a fault at the supercap, and
- if the temperature of the supercap falls below the maximum temperature value and the fault input is absent, the supercap (105) is substantially charged to the current voltage of the second on-board electrical system area (B), before the supercap is electrically connected to the second on-board electrical system area (B) and the voltage in the second on-board electrical system area stabilises, a fault input then taking place if the capacitance or C-value and/or the resistance or R-value of the supercap indicates a fault at the supercap.

2. A system according to claim 1, **characterised in that** the charge control device is a separate control/power unit (107), by means of which the precharging and/or coupling or separation of the supercap (105) to the on-board electrical system or from the on-board electrical system takes place, and which preferably also takes on the diagnosis of the supercap, more especially a determination of the capacitance and/or resistance, during the precharging operation.

3. A system according to claim 1 or 2, **characterised in that** the charge control device is furthermore adapted in such a way that when the terminal R and/or the terminal 15 are currentless and/or the doors are closed for longer than a predetermined period, the supercap is discharged to a voltage below the on-board electrical system voltage of the first on-board electrical system area and/or of the second on-board electrical system area, preferably to below about 6 to 9 volts by means of feedback into the on-board electrical system and is then electrically decoupled from the on-board electrical system.

## Revendications

1. Système (100) d'alimentation en tension de consommateurs électriques dans le réseau embarqué d'un véhicule automobile dans lequel :
- le réseau embarqué est constitué d'au moins deux domaines de réseau embarqué (A, B), le premier domaine de réseau embarqué (A) comportant un générateur électrique (101), une batterie de véhicule (102) ainsi qu'un ou plusieurs premier(s) consommateur(s) électrique(s) (103) tandis que le second domaine de réseau embarqué (B) comporte un accumulateur d'énergie (105) et un ou plusieurs second(s) consommateur(s) électrique(s) (106),
- entre les deux domaines de réseau embarqué (A, B) il est prévu un dispositif de blocage (104) tel qu'en particulier une diode semi-conductrice ou un commutateur de puissance qui autorise un flux de courant du premier domaine de réseau embarqué (A) vers le second domaine de réseau embarqué (B) et interdit largement un flux de courant inverse du premier domaine de réseau embarqué (B) vers le premier domaine de réseau embarqué (A), et
- la tension de sortie du générateur électrique (101) est augmentée et l'accumulateur d'énergie (105) est chargé lorsque la tension électrique dans le second domaine de réseau embarqué (B) devient inférieure à une première valeur de seuil,
**caractérisé en ce que**
- l'accumulateur d'énergie est un condensateur à double couche, ou un super-condensateur (105),
- un dispositif de commande de charge est prévu et adapté de sorte que pendant la charge préalable ou la charge du super-condensateur sur la tension de réseau embarqué du second domaine de réseau embarqué (B) la température du super-condensateur est mesurée et comparée à une valeur maximum et/ ou un accumulateur de défaut associé au super-condensateur est lu, l'accumulateur de défaut comportant une entrée de défaut lorsque antérieurement une comparaison de la valeur de la capacité ou valeur C et/ou de la valeur de la résistance ou valeur R du super-condensateur (105) alors présente avec des valeurs caractéristiques dépendant de la température et du courant de charge du super-condensateur enregistrées indique la présence d'un défaut au niveau du super-condensateur, et
- alors, lorsque la température dans le super-condensateur devient inférieure à la valeur maximum de la température et qu'il n'y pas d'entrée de défaut, le super-condensateur (105) est chargé largement jusqu'à la tension actuelle du second domaine de réseau embarqué (B) avant d'être électriquement relié à ce second domaine de réseau embarqué (B) et que la tension dans le second domaine de réseau embarqué soit stabilisée, une entrée de défaut étant effectuée lorsque la valeur de la capacité ou valeur C et/ou la valeur de la résistance ou valeur R du super-condensateur indique la présence d'un défaut au niveau du super-condensateur.

2. Système conforme à la revendication 1,
**caractérisé en ce que**
le dispositif de commande de la charge est une unité de puissance/commande séparée (107) par laquelle la charge préalable et/ou l'accouplement ou la séparation du super-condensateur (105) sur le réseau embarqué ou du réseau embarqué est effectué, et qui effectue également de préférence le diagnostic du super-condensateur en particulier la détermination de sa capacité et/ou de sa résistance pendant la mise en oeuvre de la charge préalable.

3. Système conforme à la revendication 1 ou 2,
**caractérisé en ce que**
le dispositif de commande de la charge est en outre adapté pour que, lorsque la borne R et/ou la borne 15 n'est pas sous tension et/ou que les portes sont fermées pendant une durée plus longue qu'une durée prédéfinie, le super-condensateur est déchargé à une tension située audessous de la tension de réseau embarqué du premier domaine de réseau embarqué et/ou du second domaine de réseau embarqué, de préférence à une valeur inférieure à environ 6 à 9 volt, par retour dans le réseau embarqué, et est alors découplé électriquement du réseau embarqué.
